**Europäisches Patentamt**

**European Patent Office**

**Office européen des brevets**

(19)

(11) Numéro de publication : **0 489 015 B1**

# (12) FASCICULE DE BREVET EUROPEEN

(45) Date de publication du fascicule du brevet :
**16.03.94 Bulletin 94/11**

(51) Int. Cl.⁵ : **F16C 29/06**

(21) Numéro de dépôt : **90908456.8**

(22) Date de dépôt : **14.06.90**

(86) Numéro de dépôt international :
**PCT/CH90/00147**

(87) Numéro de publication internationale :
**WO 91/19911 26.12.91 Gazette 91/29**

(54) **ROULEMENT LINEAIRE.**

(43) Date de publication de la demande :
**10.06.92 Bulletin 92/24**

(45) Mention de la délivrance du brevet :
**16.03.94 Bulletin 94/11**

(84) Etats contractants désignés :
**AT BE CH DE DK ES FR GB IT LI LU NL SE**

(56) Documents cités :
**CH-A- 654 886**
**CH-A- 674 554**
**CH-A- 675 284**
**DE-A- 2 116 955**
**US-A- 4 025 995**

(73) Titulaire : **RMB Roulements Miniatures SA**
**Eckweg 8**
**CH-2504 Bienne (CH)**

(72) Inventeur : **L'Inventeur a renoncé à sa**
**désignation**

(74) Mandataire : **Dietlin, Henri**
**Dietlin & Cie S A 15, rue du Mont-Blanc**
**CH-1201 Genève (CH)**

## Description

La présente invention a pour objet un roulement à billes et concerne plus précisément un roulement linéaire de précision pouvant être translaté le long d'un arbre et comprenant des circuits fermés de circulation garnis de billes. Chaque circuit fermé comporte deux portions longitudinales reliées à leurs extrémités par des portions courbes. Les billes situées dans une première portion longitudinale de chaque circuit supportent la charge du roulement sur l'arbre et se recyclent, lors d'une translation dans la portion active, en circulant dans les courbes et en contresens dans l'autre portion longitudinale.

De tels roulements linéaires remplacent souvent les guidages à glissement et ont pour avantage un faible frottement, une bonne précision et une longue durée de vie, de même que que dans les mouvement de rotation, les paliers à roulement sont préférables aux paliers à glissement.

Dans l'art antérieur, on connaît deux types principaux de configurations de roulements linéaires, l'une fermée et tubulaire, l'autre ouverte par un passage angulaire longitudinal pratiqué sur toute la longueur du roulement et lui permettant de fonctionner sur un arbre supporté.

Les roulements connus à ce jour sont de construction relativement compliquée, résultant de l'assemblage de pièces fabriquées séparément par des procédés tels que tournage, matriçage, moulage, fraisage, découpage, brochage, avec des traitement de trempe, de rectification ou autres, dans lesquels seules les billes sont obtenues sans problème sur le marché. D'autres roulements nécessitent un outillage spécifique très compliqué et onéreux.

Le brevet DE-A-2.116.955 décrit un roulement linéaire constitué par un manchon extérieur positionnant des pièces intérieures formant des circuits de billes et maintenues à leur place par le manchon et par des anneaux spéciaux engagés dans des rainures pratiquées dans le manchon. Dans la portion longitudinale active, une aiguille est disposée radialement par rapport aux billes au contact de l'arbre, pour favoriser le roulement des billes et charger celles-ci en direction de l'arbre. Ce mode de construction présente l'inconvénient de nécessiter plusieurs pièces de fabrication, forme et matériaux différents; de plus cette réalisation ne permet pas d'obtenir une configuration de roulement ouvert.

Le brevet CH-654.886 présente un roulement linéaire constitué par une pièce massive maintenant des aiguilles au-dessus des circuits de billes. Bien que dans ce cas on se trouve en présence d'une construction à base d'aiguilles retenues sur une seule pièce, cette réalisation représente un investissement important, car l'outillage de moulage est compliqué, délicat et comporte six, voire huit tiroirs fonctionnant semi-radialement afin d'obtenir toutes les formes de l'élément autour d'un noyau en deux parties. De plus cette construction massive place les aiguilles d'une façon trop rigide radialement, ce qui crée des problèmes pour introduire le roulement à sa place et rend difficile une réalisation en configuration ouverte qui, à l'inverse, se déformera vers l'intérieur. De plus, il n'est pas possible de réaliser ce roulement avec une surface extérieure fermée sans adjonction d'autres pièces supplémentaires.

On trouve encore dans l'art antérieur d'autres réalisations qui toutes nécessitent un outillage spécial et sophistiqué. Ces modes de construction demandent des investissements importants, en plus des défauts déjà signalés pour les roulements de configuration ouverte.

Le but de la présente invention est de palier à ces inconvénients et de proposer un roulement linéaire économique quoique de grande précision grâce à une construction utilisant uniquement des pièces ayant des des fonctions identiques et qui se complètent, à savoir des modules accolés, de fabrication relativement simple, ainsi que des billes et aiguilles d'acier du commerce, telles que celles utilisées dans les paliers rotatifs.

L'invention a donc pour objet un roulement linéaire pour mouvement de translation le long d'un arbre comprenant au moins un circuit fermé garni de billes formé de deux portions longitudinales reliées à leurs extrémités par des portions courbes, les billes agissant sur l'arbre supportant la charge au contact d'une aiguille disposée parallèlement à l'arbre. Il est caractérisé en ce que chaque circuit fermé est constitué par des passages longitudinaux pratiqués dans deux modules adjacents disposés longitudinalement par rapport à l'arbre et présentant, en coupe, une forme générale de segment de couronne, et en ce que les modules adjacents sont fixés l'un à côté de l'autre par une aiguille.

Dans une variante préférentielle, chaque module présente :
- un dégagement destiné à recevoir l'aiguille et
- des surfaces d'appui coopérant avec des surfaces d'appui correspondantes d'un module adjacent,

l'un desdits dégagements étant pratiqué dans une partie en saillie d'un module apte à s'engager dans une ouverture correspondante de l'autre module, cette ouverture étant bordée par l'autre dégagement, de manière à ce que l'insertion de l'aiguille maintienne les billes dans le circuit et solidarise les modules adjacents.

Comme on le verra plus loin, la juxtaposition de modules permet d'obtenir soit un roulement fermé, soit un roulement ouvert, présentant un angle d'ouverture variable en fonction du nombre et du type de modules utilisés. Il est évident qu'il est nécessaire de prévoir des modules de bordure de chaque côté de l'ouverture du roulement.

Dans une variante préférentielle, les portions courbes des circuits fermés de circulation présentent un diamètre plus grand que l'entraxe des circuits longitudinaux par l'adjonction d'une portion de circuit arrondie décalée vers l'extérieur du circuit.

Le dessin annexé représente, à titre d'exemples non limitatifs, quelques formes d'exécution de l'objet de la présente invention.

La figure 1 en est une vue latérale, l'une des aiguilles étant partiellement escamotée pour laisser apparaître les billes.

La figure 2 représente une vue de dessus, avec coupe transversale partiélle selon la ligne II-II à la figure 1, d'un roulement linéaire dans une configuration fermée.

La figure 3 est une vue de dessus, avec coupe transversale partielle, d'un roulement linéaire dans une configuration ouverte d'un angle d'une valeur traditionnelle.

La figure 4 représente la coupe transversale de deux modules adjacents en cours d'assemblage.

La figure 5 représente la coupe transversale de deux groupes de modules formant un demi-roulement et équipés d'aiguilles et de billes, avant leur assemblage.

La figure 6 représente la coupe transversale d'une variante de module présentant un pont muni d'un berceau agissant élastiquement sur une aiguille.

La figure 7 est une vue latérale d'un module tel que représenté à la figure 6, avec indication de la position de l'aiguille et des billes dans un circuit de roulement de forme préférentielle.

La figure 8 est une coupe transversale de l'un des modules situés au bord de l'ouverture dans la configuration ouverte de la figure 2.

La figure 9 est une vue latérale partielle du module de la figure 8.

La figure 10 est analogue à la figure 8 et montre le module situé vers l'autre bord de l'ouverture de la figure 2.

La figure 11 est une vue latérale partielle du module de la figure 10.

La figure 12 représente, en coupe transversale, une variante préférentielle de deux modules adjacents dans une configuration de roulement fermé, à base de 7 modules.

La figure 13 représente, en coupe transversale, une variante de module pour une configuration de roulement fermé formé de 5 modules.

La figure 14 représente, en coupe transversale, une variante de deux modules adjacents en cours d'assemblage, constituant un roulement à angle d'ouverture maximum.

La figure 15 représente une application d'utilisation de deux roulements de configuration ouverte présentant des angles d'ouverture différents.

La figure 16 représente une autre application utilisant des roulement de configuration ouverte ayant des angles d'ouverture supérieurs à 180°.

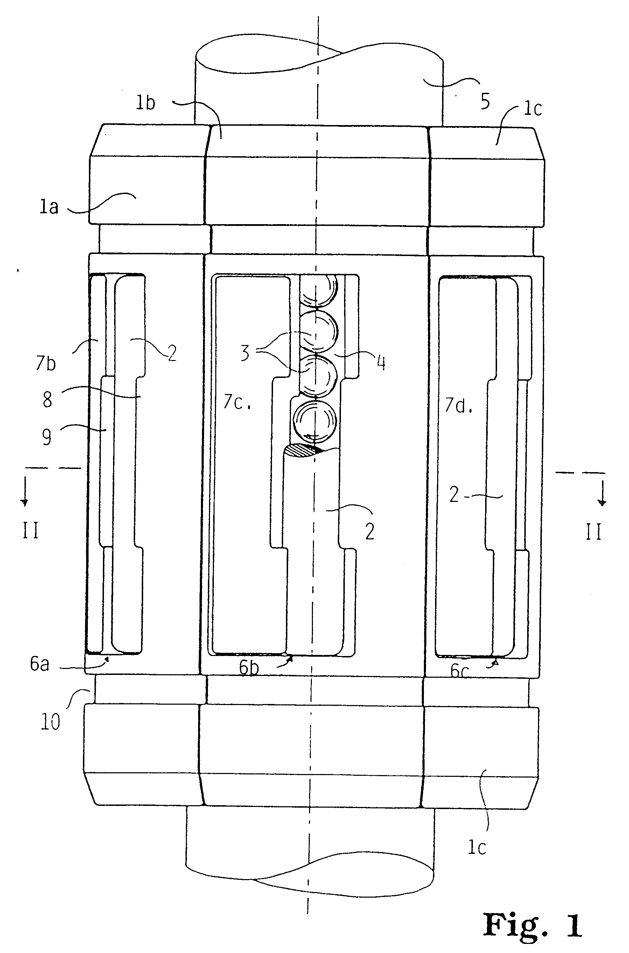

Le roulement représenté à la figure 1 est un roulement constitué de six modules 1 identiques, les modules adjacents 1a à 1c visibles étant maintenus par encliquetage des aiguilles 2 insérées dans des logements de forme correspondante après avoir disposé les séries de billes 3 dans les circuits de roulements 4. Ce roulement est représenté autour d'un arbre 5.

A cet effet, chaque module 1a, 1b, 1c, etc., comporte une ouverture 6a, 6b, 6c de longueur correspondant à la hauteur d'une aiguille 2 et de largeur telle qu'elle peut respectivement recevoir une aiguille 2 et une partie en saillie 7b, 7c, 7d du module 1b, 1c, 1d adjacent, destinée à assurer la liaison entre les modules. Pour assurer la fixation de l'aiguille 2 dans l'ouverture 6, celle-ci présente sur une partie de sa hauteur un rebord 8 latéral, situé en regard d'un dégagement biseauté 9 pratiqué dans la partie en saillie 7 du module adjacent et destiné à l'insertion d'un outil permettant de retirer l'aiguille si nécessaire.

A chaque extrémité du roulement est prévue une rainure circulaire 10 permettant l'insertion de clips, pour la fixation du roulement dans un support non représenté au dessin. Intérieurement, les modules présentent à chaque extrémité des dégagements constituant deux rainures circulaires, destinées au logement éventuel de joints d'étanchéité.

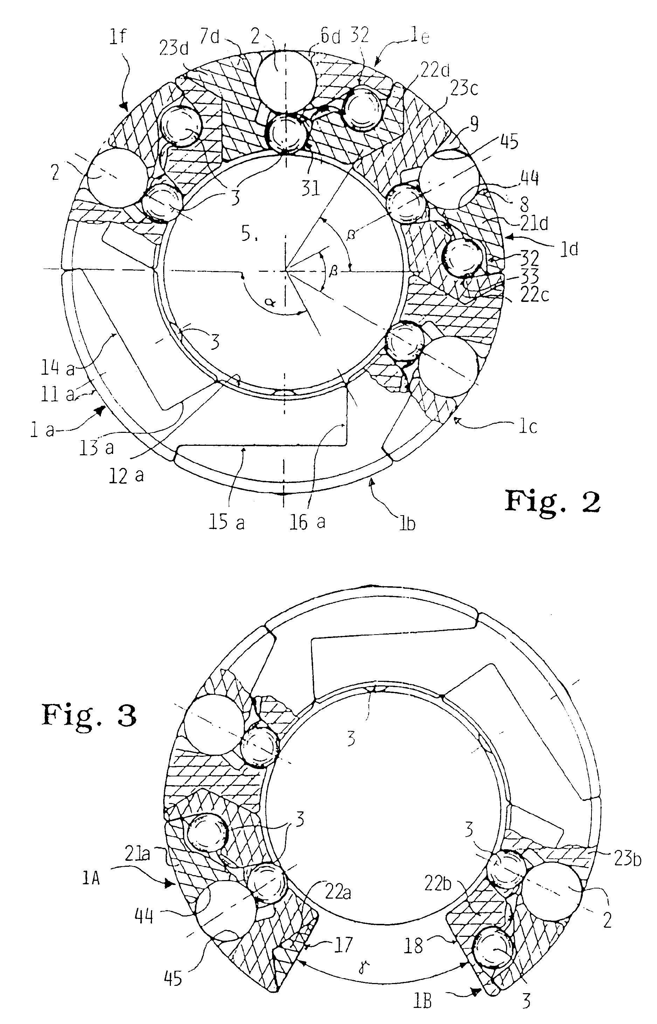

Dans la vue de dessus de la figure 2 d'un roulement linéaire en six modules 1a à 1f, on notera que chaque module a une forme représentant un segment de couronne. Par exemple, le module la comporte plus précisément un arc extérieur 11a et un arc intérieur 12a, reliés par des faces planes 13a et 14a d'un côté ainsi que 15a et 16a de l'autre, ces faces planes constituant les faces d'appui de deux modules adjacents.

Dans la partie du module représentée en coupe au niveau des ouvertures 6, on notera que le module 1d par exemple est constitué en trois parties 21d, 22d et 23d respectivement, cette dernière partie constituant la partie en saillie 7d précédemment mentionnée qui vient s'engager dans l'ouverture du module adjacent 1e. La division d'un module en trois parties est due d'une part au passage 31 créant la portion longitudinale du circuit prévu pour les billes 3 et d'autre part à l'ouverture 6d pour l'aiguille 2 et la partie 23c du segment adjacent. On notera dans la partie en coupe de la figure 2 que la partie 21d comporte le rebord 8 déjà mentionné et destiné à maintenir l'aiguille 2 en place ainsi que le dégagement biseauté 9 pratiqué dans la partie 23c du module adjacent. Bien entendu, le passage longitudinal 31 est positionné de manière à ce que les billes débordent à l'intérieur de la couronne constituée par la juxtaposition de modules.

Les modules sont constitués de telle manière que les billes 3 agissant sur l'arbre 5 sont d'autre part en contact avec l'aiguille 2 correspondante, l'aiguille et les billes étant alignées sur un axe radial par rapport à l'arbre 5. On constate que les aiguilles 2 ont plusieurs fonctions :

- la fixation de deux modules juxtaposés l'un à l'autre,
- le maintien des billes dans leur circuit fermé,
- la constitution d'une piste de roulement offrant un contact ponctuel avec les billes agissant sur l'arbre et transmettant la charge du roulement.

Le circuit fermé de circulation 4 des billes est tel que les billes actives roulent entre l'arbre et l'aiguille le long du passage 31 constituant la portion active et, après avoir parcouru la portion arrondie de liaison qui sera détaillée plus loin, glissent dans la direction opposée entre la creusure 32 de la partie 21d et la creusure 33 de la partie 22c, ces creuseures étant parallèles au passage 31 et constituant une portion longitudinale du circuit des billes, qui est de dimension sensiblement plus grande que le diamètre des billes, afin que celles-ci s'y écoulent le plus librement possible. Les billes parcourent ensuite une seconde portion arrondie de liaison avant de revenir le long de la portion longitudinale 31.

Il est à noter à la figure 2 que l'angle α représente l'angle au centre occupé par un module tandis que l'angle β constitue l'angle d'ouverture de l'arc intérieur 12. Si n représente le nombre de modules constituant un roulement fermé, l'angle au centre α est tel que :

$$\alpha \geqq 1{,}5 \times 360° / n \text{ tandis que } \beta = 360° / n$$

Le roulement linéaire représenté à la figure 3 est un roulement de type dit "ouvert", utilisé pour éviter les supports maintenant l'arbre. L'angle d'ouverture γ correspond dans la variante représentée à l'angle β d'ouverture de l'arc intérieur 12. Cette ouverture supprime l'une des aiguilles et le système de billes correspondant. Les autres modules utilisés restent identiques à ceux décrits précédemment, seuls les modules 1a et 1b étant modifiés et représentés avec les références 1A et 1B au dessin.

Le module 1A est coupé longitudinalement de telle manière que ne subsiste que la partie 21a et partiellement sa partie 22a, qui est coupée par une face plane 17. Le module 1B est coupé longitudinalement de telle manière que ne subsiste que la partie 23b et partiellement sa partie 22b, qui est coupée par une face plane 18.

Dans la représentation de la figure 3, l'angle d'ouverture est d'environ 60°. Selon la valeur de l'angle d'ouverture désiré, on utilisera un roulement comportant un nombre de modules tel que la suppression d'un ou plusieurs modules permette d'avoir l'ouverture requise.

Par exemple pour obtenir une ouverture de l'ordre de 45° tout en entourant l'arbre sur environ 315°, on utilisera un système comportant 8 modules, dont deux sont constitués par des modules modifiés 1A et 1B.

A la limite, on peut concevoir un roulement constitué uniquement de deux modules 1A et 1B tels que décrits ci-dessus et comportant un seul jeu de billes et une seule aiguille, comme on le verra en détail plus loin.

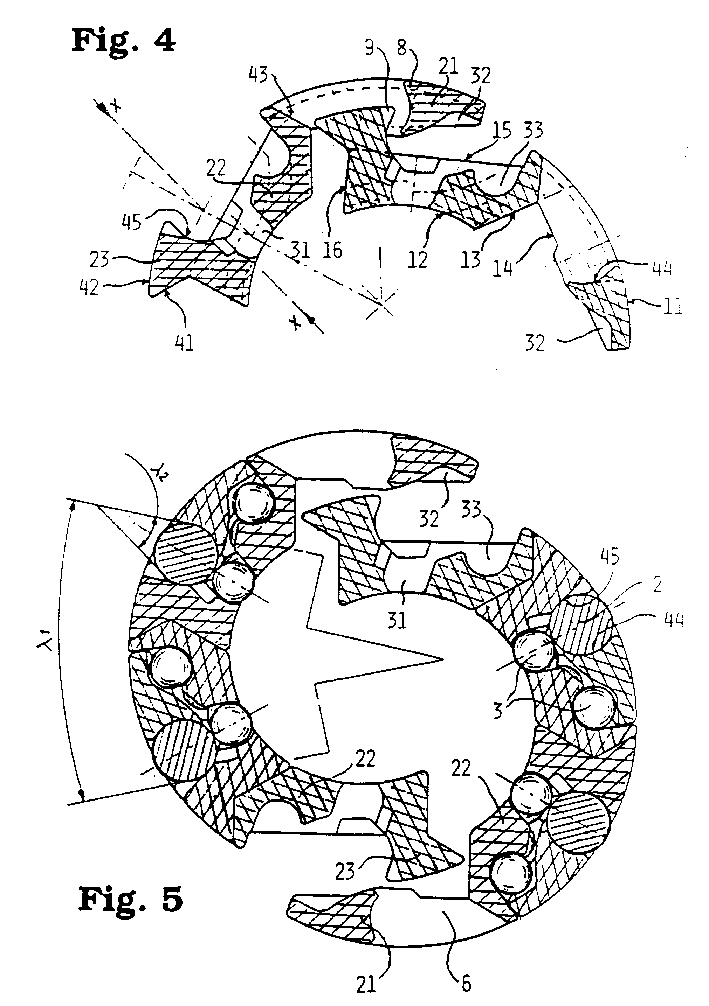

Dans la représentation de deux modules en cours d'assemblage de la figure 4 on retrouve :

- les surfaces extérieures 11 à 16 décrites précédemment,
- les trois parties coupées 21 à 23, avec le rebord 8 et le dégagement biseauté 9,
- les dégagements longitudinaux 31 à 33 constituant les portions longitudinales du circuit des billes.

On notera l'existence de la surface d'appui 41 disposée entre la face plane 16 et une partie arrondie 42 de manière à constituer la partie en saillie 23 assurant la prise dans le module voisin lorsque la face 41 vient s'appuyer contre la face plane 43 bordant la partie 22 et s'étendant entre la face plane 13 et l'arrondi 11. Sur une partie de leur hauteur, les modules comportent des dégagements arrondis destinés à retenir les aiguilles. A cet effet, la partie 21 est munie d'un dégagement 44 et la partie 23 est munie d'un dégagement 45.

En considérant la figure 4, on voit comment assembler deux modules adjacents avant l'introduction des billes dans le passage 31, afin qu'elles occupent leur circuit fermé de circulation. Les billes sont introduites par le logement prévu pour l'aiguille et sont maintenues par insertion d'une aiguille fermant l'ouverture 6. On a également représenté à la figure 4 l'axe X de fonctionnement du moule d'injection.

Dans l'exemple considéré ici d'un roulement formé de 6 modules, on assemble d'abord les modules 3 par 3, comme représenté à la figure 5, et l'on imbrique ces deux moitiés l'une dans l'autre. On notera encore que par fabrication, les faces 44 et 45 d'un module destinées à coopérer avec une aiguille forment un angle ouvert λ1. C'est grâce à l'imbrication de deux modules adjacents que l'on obtient un angle fermé λ2 destiné à maintenir l'aiguille en place. On notera également que la face 44, disposée au dessin à droite de l'aiguille 2, fait partie du module disposé à gauche de celle-ci, tandis que la face 45, disposée à gauche de l'aiguille 2, fait partie du module disposé à droite de la même aiguille, ce qui explique les forces rapprochant les modules disposés de part et d'autre de l'aiguille. Cette construction permet de maintenir l'aiguille d'une façon précise au-dessus des billes actives.

En variante, on peut prévoir d'imbriquer tous les modules avant l'introduction des billes et des aiguilles.

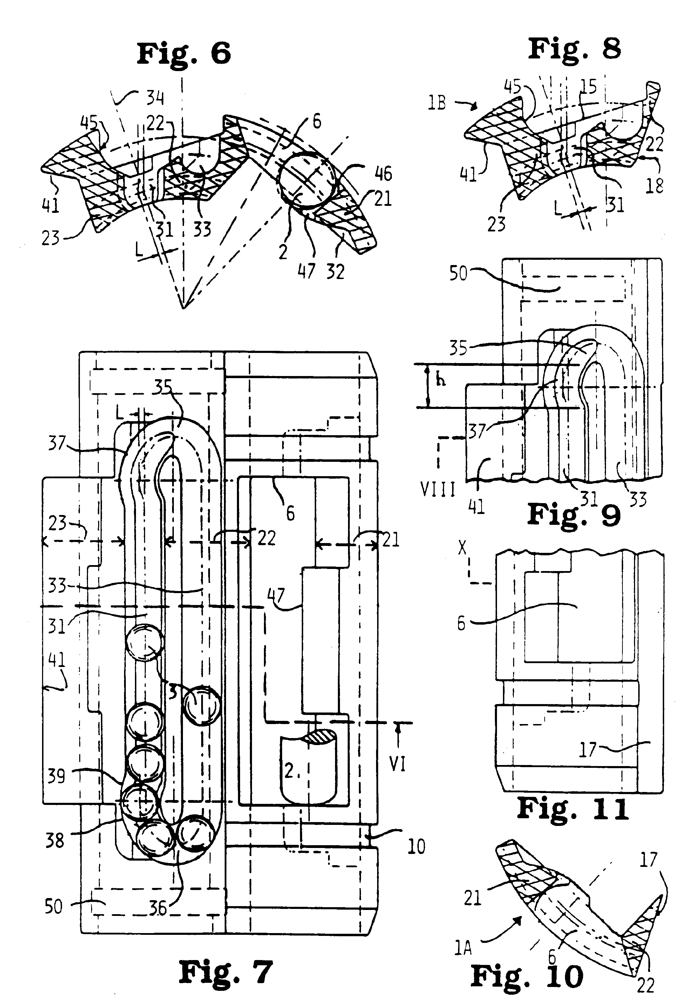

La vue de détail de la figure 6 montre une variante de module comportant comme précédemment un dégagement arrondi 45 sur une partie de la hauteur de la fenêtre qui sinon est plane, alors qu'un dégagement plane 46 est prévu de l'autre côté de l'aiguille. Sur une partie de la hauteur de l'ouverture 6, le dégagement plane 46 est bordé intérieurement par un berceau 47 destiné à placer l'aiguille 2 légèrement déportée radialement vers l'extérieur. La partie 21 constitue un élément élastique permettant d'éviter de déformer vers l'extérieur la forme générale du roulement lors de l'insertion des aiguilles ou du roulement à sa place de travail. L'aiguille est représentée en traits pleins sur le diamètre où elle est placée par le berceau 47 et en traitillés sur le diamètre de travail défini par le diamètre d'alésage où est placé le roulement. D'autre part cette partie 21 permet de retenir les billes positionnées dans la partie longitudinale inactive.

On a également représenté à la figure 6 le passage longitudinal 31, en indiquant le déplacement L apporté au chemin de roulement des billes aux abords des parties courbes, dans une variante préférentielle. Le centre des billes est déporté au-delà de l'axe 34 du passage 31 et de l'aiguille 2 d'une valeur L telle que :

$$\frac{\varnothing \text{ bille}}{8} \leq L \leq \frac{\varnothing \text{ bille}}{3,5}$$

Le chemin de circulation des billes est bien visible à la figure 7, où l'on voit les trois parties 21, 22 et 23 constituant le module dans sa partie centrale et représentées en coupe à la figure 6. Le chemin de circulation fermé 4 est constitué respectivement par :

- le passage longitudinal 31 séparant les parties 22, 23;
- des parties courbes de liaison 35 et 36 et
- le passage longitudinal 33 pratiqué dans la partie 22.

Dans certaines réalisations les portions courbes 35 et 36 sont semi-circulaires et relient directement les portions longitudinales 31 et 33. Dans la variante des figures 6 à 14, les portions courbes 35 et 36 débouchent dans des passages courbes 37 et 38, de liaison avec les passages longitudinaux 31 et 33. Les passages courbes 37 et 38 sont disposés sur une hauteur h aux deux extrémités du passage 31 et sont déplacés de la valeur L du côté opposé au passage longitudinal 33. Cette variante permet d'obtenir un rayon plus grand pour la liaison entre les passages longitudinaux parallèles 31 et 33. Elle a en outre pour avantage de placer les billes aux entrées des zones de charge de façon plus précise et plus régulière, les billes parvenant latéralement entre l'arbre 5 et l'aiguille 2 depuis le côté extérieur du circuit, avec appui sur la paroi 39 contre laquelle les billes sont appliquées dans les courbes par la force centrifuge.

On notera à la figure 7 que le berceau 47 retient l'aiguille 2 sur environ la moitié de sa longueur.

Les lignes représentées en traitillés à la figure 7 figurent les découpes réalisées sur la face interne du module, par exemple les dégagements 50 destinés à former une rainure circulaire apte à recevoir un joint d'étanchéité.

Les figures 8 et 9 sont analogues aux figures 6 et 7 et représentent le module 1B de la configuration de roulement ouvert de la figure 3, avec la face de bordure externe 18.

De même les figures 10 et 11 représentent le module 1A de bordure, avec sa face externe 17.

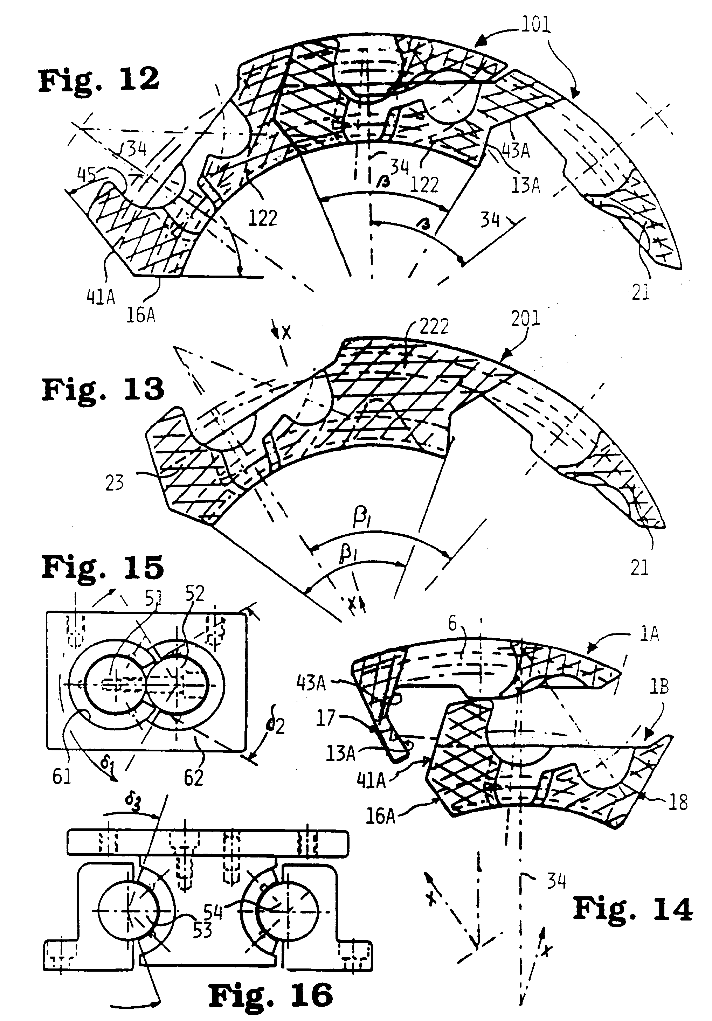

La figure 12 est un exemple de deux modules 101 utilisés dans une configuration fermée formée de 7 modules identiques, tandis que le module 201 de la figure 13 est une variante de module pour configuration fermée à 5 modules. Dans ces deux cas, les valeurs respectives de l'angle β sont donc d'environ 51° et de 72°. On remarquera que c'est la partie centrale 122 ou 222 qui est respectivement plus étroite et plus large, pour autoriser la juxtaposition des modules des différents types. On comprendra aisément qu'on peut ainsi obtenir, à partir des trois types de modules 1, 101 et 201, des roulements ouverts dont l'angle d'ouverture peut être varié selon le choix des modules utilisés.

De préférence, l'angle β1 du module représenté à la figure 13 est tel que, pour un angle au centre β du module voisin de

$$\beta = 360° / n \quad \beta1 = 360° / (n - 2)$$

où n est le nombre de modules.

Dans le cas de roulements fermés, on choisira le type de modules 1, 101 ou 201 en fonction de la charge sur l'arbre. On peut prévoir de monter des roulements dont la capacité de charge n'est pas identique sur toute la circonférence, en utilisant des modules d'ouvertures différentes et en disposant les chemins de roulements aux endroits voulus. On peut par exemple combiner 3 modules d'angle au centre de 60° et 4 modules de 45°. Cette façon de faire est utile aussi pour les roulements ouverts, pour placer une plus forte capacité de charge relativement à la position de l'ouverture.

On notera aux figures 12 et 13 que les faces d'appui 16A et 41A forment un angle à l'extérieur du segment de couronne tandis que dans les modules représentés précédemment les faces d'appui 16 et 41 limitaient un angle intérieur. L'avantage de cette variante est que la face 41A est sensiblement parallèle au bord du dégagement 45 destiné à recevoir une aiguille, de manière à éviter toute déformation radiale. Il est évident que dans cette variante, les faces d'appui correspondantes 13A et 43A sont également inversées.

La figure 14 représente un roulement ouvert sur la majorité de la circonférence de l'arbre, puisqu'il ne comporte qu'un élément 1A et qu'un élément 1B tels que décrits en regard des figures 8 à 11, mais représentés ici dans la variante d'angle extérieur entre les faces d'appuis 16A et 41A. On peut aussi prévoir d'utiliser quelques paires de tels roulement autour d'un arbre de grande dimension.

La figure 15 représente l'assemblage de deux roulements linéaires ouverts destinés au passage de deux arbres parallèles 51 et 52 accouplés. Les angles d'ouverture des roulement sont respectivement δ1 et δ2.

On notera en outre que l'arbre 51 centre le roulement par trois circuits de billes tandis que l'arbre 52 utilise seulement 2 circuits de billes. Dans ce cas particulier, on remarque qu'il est donc possible de construire des roulements sans remplir tous les circuits de billes. Grâce à cette possibilité, les alésages pratiqués dans le support 62 nécessitent moins de précision d'entraxe.

Les roulements sont par exemple fixés dans le support 62 par points de colle réalisés uniquement sur les parties extérieures sans contact avec les aiguilles, pour bloquer le roulement sans influencer la position des aiguilles. Ce détail est particulièrement important dans la version de la figure 6 comprenant des aiguilles soumises à l'action de berceaux déformables 47.

Le corps du roulement a de préférence un diamètre légèrement inférieur au diamètre de l'alésagee 61 tandis que les aiguilles définissent par leur génératrice extérieure un diamètre légèrement plus grand que cet alésage et de ce fait se positionnent sur le diamètre de cet alésage 61 par élasticité du corps du roulement ou dans la variante à berceau 47 par élasticité du pont 21.

La figure 16 propose à titre d'exemple un montage pour deux arbres parallèles 53 et 54 entre lesquels sont disposés deux roulements d'ouverture δ3.

Les roulements représentés au dessin sont avantageusement réalisés pour des diamètres d'arbre allant de 12 mm à 50 mm.

Les modules selon l'invention sont réalisés en matière plastique par injection sous pression. On utilisera par exemple du polyacétal, que l'on peut en variante charger à volonté de verre. En raison de leur forme particulièrement simple, les modules sont obtenus dans un moule à un tiroir fonctionnant dans une seule direction, selon l'axe X représenté au dessin.

On peut aussi prévoir de mettre sur le marché des modules non assemblés, l'utilisateur se chargeant du montage des roulements avec des aiguilles et des billes du commerce. Si l'on choisit des aiguilles et des billes en acier inoxydable, on aura naturellement une version de roulement anti-corrosion.

On remarquera encore, plus particulièrement à la figure 1, que le roulement décrit ne présente pas d'ouvertures vers l'extérieur une fois monté, ce qui évite toute introduction de corps étrangers. En effet les ouvertures 6 sont dimensionnées de telles manière qu'elles soient bouchées par les parties en saillie 7 et les aiguilles 2.

**Revendications**

1. Roulement linéaire pour mouvement de translation le long d'un arbre (5) comprenant au moins un circuit fermé (4) garni de billes (3) formé de deux portions longitudinales reliées à leurs extrémités par des portions courbes, les billes agissant sur l'arbre supportant la charge au contact d'une aiguille (2) disposée parallèlement à l'arbre,
caractérisé en ce que chaque circuit fermé est constitué par des passages longitudinaux (31 à 33) pratiqués dans deux modules adjacents (1, 1A, 1B; 101, 201) disposés longitudinalement par rapport à l'arbre et présentant, en coupe, une forme générale de segment de couronne, et en ce que les modules adjacents sont fixés l'un à côté de l'autre par une aiguille (2).

2. Roulement linéaire selon la revendication 1, caractérisé en ce que chaque module présente :
   - un dégagement (45; 44,46) destiné à recevoir l'aiguille et
   - des surfaces d'appui (13, 14, 43; 13A, 14, 43A) coopérant avec des surfaces d'appui correspondantes (16, 15, 41; 16A, 15, 41A) d'un module adjacent,
l'un desdits dégagements (45) étant pratiqué dans une partie en saillie (7,23) d'un module apte à s'engager dans une ouverture correspondante (6) de l'autre module, cette ouverture étant bordée par l'autre dégagement (44,46) de manière à ce que l'insertion de l'aiguille maintienne les billes dans le circuit (4) et solidarise les modules adjacents.

3. Roulement linéaire selon la revendication 1 ou 2, caractérisé en ce que certains modules comportent une ouverture et une partie en saillie.

4. Roulement linéaire selon la revendication 3, caractérisé en ce que le nombre de circuits (4) correspond au nombre de modules comportant une ouverture et une partie en saillie, pour former un roulement fermé.

5. Roulement linéaire selon la revendication 3, caractérisé en ce que le nombre de circuits est inférieur d'une unité au nombre de modules, pour former un roulement ouvert dont l'angle d'ouverture est déterminé en fonction du nombre et du type des modules utilisés.

6. Roulement linéaire selon la revendication 5, caractérisé en ce que chaque module de bordure (1A,1B) a une face (17,18).

7. Roulement linéaire selon les revendications précédentes, caractérisé en ce que le passage longitudinal (31) surplombé par l'aiguille (2) comporte près des portions courbes (35,36) un passage courbe (37,38) situé au-delà de l'axe (34) du passage (31) du côté opposé à la portion longitudinale (32,33) à une distance L telle que :

$$\frac{\varnothing \text{ bille}}{8} \leqq L \leqq \frac{\varnothing \text{ bille}}{3,5}$$

8. Roulement linéaire selon la revendication 2 ou 3, caractérisé en ce que l'ouverture est bordée extérieurement sur une partie de sa hauteur par un rebord (8) destiné à maintenir l'aiguille et en ce que la partie en saillie (7,23) présente un dégagement biseauté (9) sur une hauteur sensiblement égale au rebord (8).

9. Roulement linéaire selon la revendication 8, caractérisé en ce que l'ouverture est bordée intérieurement sur une partie de sa hauteur par un berceau (47) solidaire de la partie (21) pour repousser l'aiguille (2) vers l'extérieur.

10. Roulement linéaire selon la revendication 3, caractérisé en ce que chaque module présente en coupe un segment de couronne avec un angle $\alpha$ d'ouverture extérieur et un angle $\beta$ d'ouverture intérieur tels que, si n représente le nombre de modules d'un roulement fermé :

$\alpha \geqq 1,5 \times 360° / n$ tandis que $\beta = 360° / n$

11. Roulement linéaire selon la revendication 3, caractérisé en ce que les dégagements (44,45) d'un module définissent un angle ($\lambda 1$) ouvert et en ce que les dégagements (45,44) de deux modules adjacents définissent un angle ($\lambda 2$) fermé, de manière à maintenir l'aiguille de façon précise au-dessus des billes dans le passage (31).

12. Roulement linéaire selon la revendication 8 ou 9, caractérisé en ce que les aiguilles définissent par leur génératrice extérieure un diamètre supérieur au diamètre du corps du roulement.

13. Roulement linéaire selon la revendication 2, caractérisé en ce que les surfaces d'appui (16A et 41A) définissent un angle extérieur tel que la surface (16A) présente un angle minimum avec le bord du dégagement (45), de manière à éviter toute déformation radiale.

## Claims

1. A linear bearing for translational movement along a shaft (5) comprising at least one closed circuit (4) provided with balls (3) and formed of two longitudinal portions connected at their ends by curved portions, the balls acting on the shaft supporting the load in contact with a needle (2) arranged parallel to the shaft, characterized by the fact that each closed circuit is formed of longitudinal passages (31-33) provided in two adjacent modules (1, 1A, 1B; 101, 201) arranged longitudinally with respect to the shaft and having, in cross section, the general shape of a ring segment, and by the fact that the adjacent modules are fixed alongside of each other by a needle (2).

2. A linear bearing according to Claim 1, characterized by the fact that each module has:
   - a cutout (45; 44,46) for receiving the needle and
   - resting surfaces (13, 14, 43; 13A, 14, 43A) cooperating with corresponding resting surfaces (16, 15, 41; 16A, 15, 41A) of an adjacent module,

   one of said cutouts (45) being made in a protruding part (7,23) of a module adapted to engage in a corresponding opening (6) in the other module, said opening being boarded by the other cutout (44,46) in such a manner that the insertion of the needle maintains the balls in the circuit (4) and firmly holds the adjacent modules together.

3. A linear bearing according to Claim 1 or 2, characterized by the fact that certain modules have an opening and a protruding part.

4. A linear bearing according to Claim 3, characterized by the fact that the number of circuits (4) corresponds to the number of modules comprising an opening and a protruding part, in order to form a closed bearing.

5. A linear bearing according to Claim 3, characterized by the fact that the number of circuits is less by one unit than the number of modules, in order to form an open bearing the opening angle of which is determined as a function of the number and type of the modules used.

6. A linear bearing according to Claim 5, characterized by the fact that each edge module (1A, 1B) has a plain face (17,18).

7. A linear bearing according to the preceding claims, characterized by the fact that the longitudinal passage (31) over which there is the needle (2) has, close to the curved portions (35,36), a curved passage (37,38) located on the other side of the axis (34) of the passage (31) on the side opposite the longitudinal portion (32,33) at a distance L such that

$$\frac{\varnothing \text{ ball}}{8} \leqq L \leqq \frac{\varnothing \text{ ball}}{3,5}$$

8. A linear bearing according to Claim 2 or 3, characterized by the fact that the opening is boarded on the outside over a part of its height by a shoulder (8) intended to hold the needle and by the fact that the protruding part (7,23) has a bevelled cutout (9) over a height substantially equal to the shoulder (8).

9. A linear bearing according to Claim 8, characterized by the fact that the opening is boarded on the inside over a part of its height by a cradle (47) integral with the part (21) in order to push the needle (2) towards the outside.

10. A linear bearing according to Claim 3, characterized by the fact that each module has, in cross section, a ring segment with an outer opening angle $\alpha$ and an inner opening angle $\beta$ which are such that if n represents the number of modules of a closed bearing then:
$\alpha \geqq 1,5 \times 360° / n$ while $\beta = 360° / n$

11. A linear bearing according to Claim 3, characterized by the fact that the cutouts (44,45) of a module define an open angle ($\lambda_1$) and by the fact that the cutouts (45,44) of two adjacent modules define a closed angle ($\lambda_2$) so as to hold the needle precisely above the balls in the passage (31).

12. A linear bearing according to Claim 8 or 9, characterized by the fact that the needles by their outer generatrix define a diameter which is greater than the diameter of the body of the bearing.

13. A linear bearing according to Claim 2, characterized by the fact that the resting surfaces (16A and 41A) define an outer angle such that the surface (16A) forms a minimum angle with the edge of the cutout (45) so as to avoid any radial deformation.

**Patentansprüche**

1. Lineares Wälzlager für eine translatorische Bewegung entlang einer Welle (5) mit wenigstens einem mit Wälzkörpern (3) ausgestatteten geschlossenen Laufkreis (4), der aus zwei Längsabschnitten besteht, die an ihren Enden über gekrümmte Abschnitte verbunden sind, wobei die Wälzkörper auf die Welle einwirken, welche die Last in Berührung mit einer parallel zu der Welle angeordneten Nadel (2) aufnimmt, **dadurch gekennzeichnet, daß** jeder geschlossene Laufkreis aus Längsbahnen (31 bis 33) besteht, welche in zwei benachbarte Module (1, 1A, 1B; 101, 201) eingebracht sind, welche in Längsrichtung gegenüber der Welle angeordnet sind und im Querschnitt die allgemeine Form eines Ringsegmentes haben und dadurch, daß die benachbarten Module durch eine Nadel (2) Seite an Seite befestigt sind.

2. Lineares Wälzlager nach Anspruch 1, **dadurch gekennzeichnet, daß** jedes der Module folgendes aufweist:
   - einen Freistich (45; 44, 46) für die Aufnahme der Nadel, und
   - Auflageflächen (13, 14, 43; 13A, 14, 43A), welche mit entsprechenden Auflageflächen (16, 15, 41; 16A, 15, 41A) eines benachbarten Moduls zusammenwirken,
   wobei einer der Freistiche (45) in einen vorspringenden Abschnitt (7, 23) eines Moduls eingearbeitet ist, der in eine entsprechende Öffnung (6) des anderen Moduls eingreifen kann und diese Öffnung von dem anderen Freistich (44, 46) so umrandet wird, daß der Einschub der Nadel die Wälzkörper in dem Laufkreis (4) hält und die benachbarten Module untereinander verbindet.

3. Lineares Wälzlager nach einem der Ansprüche 1 oder 2, **dadurch gekennzeichnet, daß** einige der Module eine Öffnung und einen vorspringenden Abschnitt aufweisen.

4. Lineares Wälzlager nach Anspruch 3, **dadurch gekennzeichnet, daß** die Anzahl der Laufkreise (4) der Anzahl der Module entspricht, welche eine Öffnung und einen vorspringenden Abschnitt aufweisen, um ein geschlossenes Wälzlager zu bilden.

5. Lineares Wälzlager nach Anspruch 3, **dadurch gekennzeichnet, daß** die Anzahl der Laufkreise um eine Einheit geringer ist, als die Anzahl der Module, um ein offenes Wälzlager zu bilden, dessen Öffnungswinkel je nach Anzahl und Art der verwendeten Module bestimmt wird.

6. Lineares Wälzlager nach Anspruch 5, **dadurch gekennzeichnet, daß** jedes der Randmodule (1A, 1B) eine Fläche (17, 18) aufweist.

7. Lineares Wälzlager nach einem der vorausgegangenen Ansprüche, **dadurch gekennzeichnet, daß** die von der Nadel (2) überlagerte Längsbahn (31) an den gekrümmten Abschnitten (35, 36) eine gekrümmte Laufbahn (37, 38) aufweist, die jenseits der Achse (34) der Laufbahn (31) an der gegenüberliegenden Seite des Längsabschnittes (32, 33) in einem Abstand $L$ angeordnet ist, welcher wie folgt berechnet wird:

$$\frac{\varnothing \text{ Wälzkörper}}{8} \leqq L \leqq \frac{\varnothing \text{ Wälzkörper}}{3,5}$$

8. Lineares Wälzlager nach einem der Ansprüche 2 oder 3,
   **dadurch gekennzeichnet, daß**
   die Öffnung an der Außenseite über einen Teil ihrer Höhe von einer Kante (8) umrandet wird, welche dafür bestimmt ist, die Nadel zu halten und dadurch, daß der vorspringende Abschnitt (7, 23) über eine Höhe, die weitgehend gleich der Kante (8) ist, einen angefasten Freistich (9) aufweist.

9. Lineares Wälzlager nach Anspruch 8,
   **dadurch gekennzeichnet, daß**
   die Öffnung an der Innenseite über einen Abschnitt ihrer Höhe von einem mit dem Abschnitt (21) verbundenen Sattel (47) umrandet ist, um die Nadel (2) nach außen zu drücken.

10. Lineares Wälzlager nach Anspruch 3,
    **dadurch gekennzeichnet, daß**
    jedes Modul im Querschnitt ein Ringsegment mit einem äußeren Öffnungswinkel $\alpha$ und einem inneren Öffnungswinkel $\beta$ aufweist, die, wenn $n$ die Anzahl der Module eines geschlossenen Wälzlager darstellt, wie folgt geschrieben werden:
    $$\alpha \geqq 1{,}5 \times 360° / n \text{ während } \beta = 360° / n$$

11. Lineares Wälzlager nach Anspruch 3,
    **dadurch gekennzeichnet, daß**
    die Freistiche (44, 45) eines Moduls einen offenen Winkel ($\lambda$1) bilden und dadurch, daß die Freistiche (45, 44) von zwei benachbarten Modulen einen geschlossenen Winkel ($\lambda$2) bilden, um die Nadel präzise über den Wälzkörpern in der Laufbahn (31) zu halten.

12. Lineares Wälzlager nach einem der Ansprüche 8 oder 9,
    **dadurch gekennzeichnet, daß**
    die Nadeln über ihren Außenumfang einen Durchmesser bilden, der größer ist, als der Durchmesser des Wälzkörpers.

13. Lineares Wälzlager nach Anspruch 2,
    **dadurch gekennzeichnet, daß**
    die Auflageflächen (16A und 41A) einen äußeren Winkel bilden, der so beschaffen ist, daß die Fläche (16A) einen minimalen Winkel mit dem Rand des Freistiches (45) bildet, um so mögliche radiale Verformungen zu vermeiden.

**Fig. 1**

Fig. 2

Fig. 3

# Fig. 4

# Fig. 5

12

# Fig. 6

# Fig. 8

# Fig. 7

# Fig. 9

# Fig. 11

# Fig. 10

Fig. 12

Fig. 13

Fig. 15

Fig. 14

Fig. 16